# EUROPEAN PATENT APPLICATION

(11) **EP 4 823 202 A1**
(43) Date of publication of application: **14.10.2026**
(21) Application number: 24910100.7
(22) Date of filing: 29.09.2024
(51) Int. Cl.: H04W 72/0446

(54) **RESOURCE MANAGEMENT METHOD**

(30) Priority: 25.12.2023 CN 202311811979
(71) Applicant: ZTE CORPORATION, Shenzhen, Guangdong 518057 (CN)
(72) Inventor: XIONG, Quan, Shenzhen, Guangdong 518057 (CN); TAN, Bin, Shenzhen, Guangdong 518057 (CN); LIU, Aihua, Shenzhen, Guangdong 518057 (CN)
(74) Representative: Pennacchio, Salvatore Giovanni
(86) International application number: PCT/CN2024/122472
(87) International publication number: WO 2025/139157

(57) **Abstract**

Provided is a method for managing resources, including: creating a resource based on a time dimension, wherein the resource based on the time dimension indicates a resource amount bearable based on a time unit; and processing the resource based on the time dimension .

## Description

### Cross-Reference to Related Application

The present disclosure is based upon and claims the benefit of priority of Chinese Patent Application 202311811979.6, filed on 25 December 2023, the disclosure of which is incorporated herein by reference in its entirety.

### Technical Field

Embodiments of the present disclosure relate to the field of communications, and in particular, to a method for managing resources.

### Background

A deterministic network refers to a forwarding capability that can provide deterministic service SLA (Service-Level Agreement) guarantees in a network. At the current stage, the main objectives are to support a deterministic low packet loss rate, a deterministic forwarding delay bound, and a deterministic upper jitter limit. In order to meet service requirements such as deterministic services and to implement deterministic technologies at the L3 layer, the IETF standards organization proposes Deterministic Networking (DetNet), in which RFC8655 defines the DetNet-related technical architecture to provide deterministic services for Layer 2 bridges and Layer 3 routed networks. DetNet Quality of Service (QoS) requirements include a deterministic upper delay limit, a low packet loss rate, reduced jitter, high reliability, etc. A deterministic network uses resource reservation, explicit routing, and service protection to provide deterministic QoS.

Currently, IETF DetNet utilizes Traffic Engineering (TE) technologies to guarantee a certain level of QoS, and adopts a resource scheduling and management method of reserving bandwidth resources. However, in a large-scale networking scenario, there are issues such as large-scale dynamic concurrent traffic, large-scale complex topologies, and long-distance delays. Reserving bandwidth alone cannot guarantee deterministic delay and jitter.

In the scenario of large-scale networking requirements, IETF proposes Enhanced DetNet, which needs to enhance a time-based queue scheduling mechanism to guarantee deterministic delay and jitter, etc. IETF has currently proposed multiple queue scheduling mechanisms, and each queue mechanism can provide different delay and jitter capabilities. In addition to traditional bandwidth resources, TE needs to manage and schedule multi-dimensional deterministic resources such as queues and buffers, which makes resource management and scheduling complex. Moreover, since various queue mechanisms have no unified mechanism for scheduling and controlling these resources, they are incompatible with each other and cannot meet deterministic service carrying requirements.

### Summary

Embodiments of the present disclosure provide a method for managing resources, so as to at least solve the problem in the related art that, in addition to traditional bandwidth resources, TE also needs to manage and schedule multi-dimensional deterministic resources such as queues and buffers, which makes resource management and scheduling complex.

According to one embodiment of the present disclosure, a method for managing resources is provided, including:
creating a resource based on a time dimension, wherein the resource based on the time dimension indicates a resource amount bearable based on a time unit; and
processing the resource based on the time dimension.

According to another embodiment of the present disclosure, a computer-readable storage medium is further provided. The computer-readable storage medium has a computer program stored therein, wherein the computer program is configured to, when being executed, perform the steps of any one of the above method embodiments.

According to yet another embodiment of the present disclosure, an electronic device is further provided, including a memory and a processor. The memory has a computer program stored therein, and the processor is configured to execute the computer program to perform the steps of any one of the above method embodiments.

### Brief Description of the Drawings

FIG. 1 is a hardware structure block diagram of a mobile terminal for a method for managing resources according to an embodiment of the present disclosure;
FIG. 2 is a flowchart of a method for managing resources according to an embodiment of the present disclosure;
FIG. 3 is a schematic diagram of Time-based Resources Container sub-TLV according to an embodiment of the present disclosure;
FIG. 4 is a schematic diagram of Latency-based Time-Unit sub-sub-TLV according to an embodiment of the present disclosure;
FIG. 5 is a schematic diagram of Jitter-based Time-Unit sub-sub-TLV according to an embodiment of the present disclosure;
FIG. 6 is a schematic diagram of Time-based Resources Capacity sub-TLV according to an embodiment of the present disclosure;
FIG. 7 is a schematic diagram of Time Unit Resource sub-sub-TLV according to an embodiment of the present disclosure;
FIG. 8 is a structural diagram of a centralized deterministic network according to an embodiment of the present disclosure;
FIG. 9 is a structural diagram of a distributed deterministic network according to an embodiment of the present disclosure;
FIG. 10 is a structural diagram of a hybrid deterministic network according to an embodiment of the present disclosure.

### Detailed Description of the Embodiments

Embodiments of the present disclosure will be described below in detail with reference to the accompanying drawings and in conjunction with examples.

It should be noted that, terms such as "first" and "second" in the description, claims, and accompanying drawings of the present disclosure are used to distinguish similar objects, but are not necessarily used to describe a specific sequence or order.

The IETF proposes various queue scheduling mechanisms, and each queue mechanism can provide different delay and jitter capabilities, for example, a deadline-based queue mechanism which can ensure a bounded delay, a queue mechanism based on a rate and a priority, a queue mechanism based on a period and a time slot which can ensure an end-to-end jitter, and the like.

The queue scheduling mechanism needs to combine the corresponding buffer and bandwidth requirements to ensure the transmission delay and jitter of the deterministic stream. When the TSN ATS/CBS/ADN scheduling mechanism is used, different traffic classes (such as CDT, class A, class B) may allocate initial burst traffic and bandwidth credits, and then gain an upper bound on the delay per hop for each traffic class according to the 'rate-delay' service curve; when a Cyclic Queuing and Forwarding (CQF)/Cycle Specified Queuing and Forwarding (CSQF) scheduling mechanism is used, different initial bandwidth resource shares can be allocated to different cyclic levels, wherein a delay upper limit per hop of each cyclic level is related to the length of the cycle; when an Earliest Deadline First (EDF) algorithm or a Deadline scheduling mechanism is used, different delay levels can be allocated to different initial burst resource and bandwidth resource shares, satisfying a schedulability condition, and each delay level determines a delay upper bound per hop; in a deterministic link using a Timeslot Queueing and Forwarding (TQF) scheduling mechanism, each time slot number within an arrangement period has an initial burst quantity of resources, the size thereof does not exceed the time slot length multiplied by the link bandwidth, and the upper bound of each-hop delay depends on the offset between an incoming time slot and a reserved outgoing time slot. Therefore, a queue scheduling mechanism, a bandwidth, a buffer, and the like are all used to ensure a resource with a deterministic capability.

A traditional resource management and control object is generally a bandwidth resource, and is an average bit amount based on a statistical probability. Currently, what is scheduled by a TE traffic engineering technology is a bandwidth resource; however, certainty cannot be ensured only by ensuring an average bit amount such as deterministic delay and jitter. Allocation of bit volume based on the time dimension therefore needs to be considered. In addition to traditional bandwidth resources, TE needs to manage and schedule multi-dimensional deterministic resources such as queue scheduling and buffers. A multi-dimensional resource needs to be converted into a one-dimensional resource based on a time dimension, and at the same time, since various queue mechanisms do not have a unified mechanism for scheduling and managing these resources, they are not compatible with each other. To simplify resource management and scheduling, unified resource management and control based on a time dimension needs to be implemented, so as to ensure deterministic resource management and scheduling such as deterministic delay jitter.

However, in the related art, neither deterministic resource scheduling and management based on a time dimension nor protocol extension based on a time dimension is considered, and a deterministic service bearer requirement cannot be satisfied.

Based on the described existing technical problem, an embodiment of the present disclosure provides a method for managing resources. A time-dimension-based resource is quantized into a maximum bit amount that can be borne by a time unit, thereby solving the problem in the related art that in addition to traditional bandwidth resources, a TE also needs to manage and schedule multi-dimensional deterministic resources such as a queue and a buffer, which addresses the problem of complex resource management and scheduling to achieve the purpose of scheduling resources based on a time dimension to satisfy differentiated deterministic service quality; at the same time, processing is performed based on the quantized time resource, such as extending a resource advertisement protocol, and resource advertisement based on the time resource is performed, thereby realizing the guarantee of deterministic delay jitter.

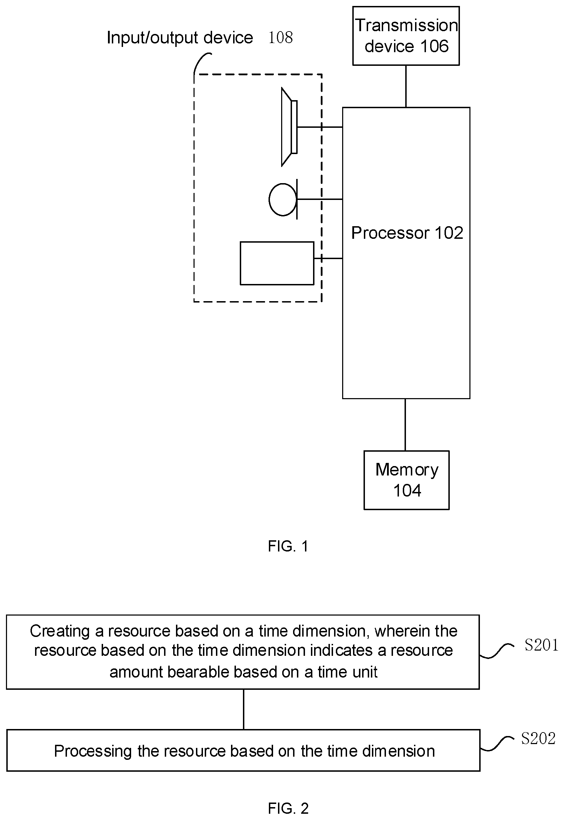

The method examples provided in the embodiments of the present disclosure can be executed in a mobile terminal, a computer terminal or a similar computing device. Taking the mobile terminal running as an example, Fig. 1 is a hardware structure block diagram of a mobile terminal of a method for managing resources according to an embodiment of the present disclosure. As shown in Fig. 1, the mobile terminal may include one or more (only one is shown in Fig. 1) processors 102 (the processors 102 may include, but are not limited to, a processing apparatus such as a microprocessor MCU or a programmable logic device FPGA) and a memory 104 for storing data, wherein the mobile terminal can further include a transmission apparatus 106 and an input/output device 108 for a communication function. A person of ordinary skill in the art may understand that the structure shown in Fig. 1 is merely exemplary, which does not limit the structure of the foregoing mobile terminal. For example, the mobile terminal may further include more or less components than shown in Fig. 1, or have a different configuration from that shown in Fig. 1.

The memory 104 may be configured to store a computer program, for example, a software program and a module of application software, such as a computer program corresponding to the method for managing resources in the embodiments of the present disclosure. The processor 102 runs the computer program stored in the memory 104, so as to execute various function applications and data processing, that is, to implement the foregoing method. Memory 104 may include high-speed random access memory, and may also include non-volatile memory, such as one or more magnetic storage devices, flash memory, or other non-volatile solid-state memory. In some instances, memory 104 may further include memory remotely located with respect to processor 102, which may be connected to mobile terminals over a network. Examples of such networks include, but are not limited to, the Internet, intranets, local area networks, mobile communication networks, and combinations thereof.

The transmission apparatus 106 is used to receive or transmit data via a network. Specific examples of the described network may include a wireless network provided by a communication provider of the mobile terminal. In one example, the transmission apparatus 106 may include a Network Interface Controller (NIC) that may be coupled to other network devices via a base station to communicate with the Internet. In one example, the transmission apparatus 106 may be a Radio Frequency (RF) module for communicating wirelessly with the Internet.

In this embodiment, a method for managing resources is provided. FIG. 2 is a flowchart of a method for managing resources according to an embodiment of the present disclosure. As shown in FIG. 2, the flow includes the following steps:
Step S201, creating a resource based on a time dimension, wherein the resource based on the time dimension indicates a resource amount bearable based on a time unit.

Exemplarily, the resource based on the time dimension may be quantified into a maximum bit amount bearable based on the time unit, for quantifying deterministic capability.

In an exemplary embodiment, step S201 may include:
dividing, by employing a containerized manner, resources based on the time dimension, to generate a time container of the resources.

As an example, resources may be proportionally divided into the time container based on the time dimension. The time container may be composed of multiple time units.

In an exemplary embodiment, the time container is used for quantifying deterministic capability of a resource object, and a type of the resource object includes at least one of the following types: a physical link, a node, or a virtual link.

Exemplarily, the time container may quantify deterministic capability of a resource object, and the type of the resource object may include, but is not limited to, a physical link, a node, or a virtual link. For example, the time container may quantify deterministic capability of a physical link, and one physical link may have one time container.

In an exemplary embodiment, a type of the resource based on the time dimension includes at least one of the following: bandwidth or a buffer; and a resource unit of the resource amount bearable based on the time unit includes at least one of the following units: Bits, Bytes, or Octets.

Exemplarily, the type of the resource based on the time dimension may include, but is not limited to, bandwidth, a buffer, etc.; and the resource unit of the resource amount bearable based on the time unit may include, but is not limited to, Bits, Bytes, Octets, etc.

Step S202, processing the resource based on the time dimension.

In the embodiments of the present disclosure, after the resource based on the time dimension is quantified into the time container, the resource based on the time dimension may be processed, i.e., the resource of the time container is processed.

In an exemplary embodiment, step S202 may include:
processing the resource based on the time dimension; wherein a processing manner includes at least one of the following manners: advertising, reserving, or allocating.

Exemplarily, the resource based on the time dimension may be advertised, or the resource based on the time dimension may be reserved, or the resource based on the time dimension may also be allocated.

In an exemplary embodiment, advertising the resource based on the time dimension includes:
extending a resource advertisement protocol to carry resource information based on the time dimension, wherein the resource information based on the time dimension is used for indicating resource capacity of the time dimension, and the resource information based on the time dimension includes the resource amount bearable based on the time unit;
advertising, based on the resource advertisement protocol carrying the resource information based on the time dimension, the resource based on the time dimension.

Exemplarily, the resource advertisement protocol may be extended to carry the resource information based on the time dimension, wherein the resource information based on the time dimension is used for indicating resource capacity of the time dimension, and the resource information based on the time dimension may include the resource amount bearable based on the time unit.

The resource based on the time dimension may be advertised based on the resource advertisement protocol carrying the resource information based on the time dimension.

In an exemplary embodiment, advertising the resource based on the time dimension further includes:
extending the resource advertisement protocol to carry time container information, wherein the time container information is used for indicating a resource object of the time container;
advertising, based on the resource advertisement protocol carrying the time container information, the resource based on the time dimension.

Exemplarily, the resource advertisement protocol may be extended to carry the time container information, wherein the time container information is used for indicating the resource object of the time container, and the resource based on the time dimension may be advertised based on the resource advertisement protocol carrying the time container information.

In an exemplary embodiment, the resource advertisement protocol includes at least one of the following protocols: an Interior Gateway Protocol (IGP), or a Border Gateway Protocol - Link State (BGP-LS).

Exemplarily, the resource advertisement protocol may include, but is not limited to, an Interior Gateway Protocol (IGP) and a Border Gateway Protocol - Link State (BGP-LS).

The IGP protocol includes an Intermediate System to Intermediate System (ISIS) protocol and an Open Shortest Path First (OSPF) protocol. Both protocols are protocols used for routing selection.

As an example, the resource based on the time dimension may be flooded. The IGP protocol may be used to flood and collect time container resource information on a link. The IGP protocol may be extended to carry a Time-based Resources Container sub-TLV for indicating the resource object of the time container, and the IGP protocol may be extended to carry a Time-based Resources Capacity sub-TLV for indicating resource capacity of the time dimension. In the OSPF protocol, it may be carried in a TE Link TLV of a TE LSA; in the ISIS protocol, it may be carried in IS-IS TLVs 22, 23, 25, 141, 222, and 223.

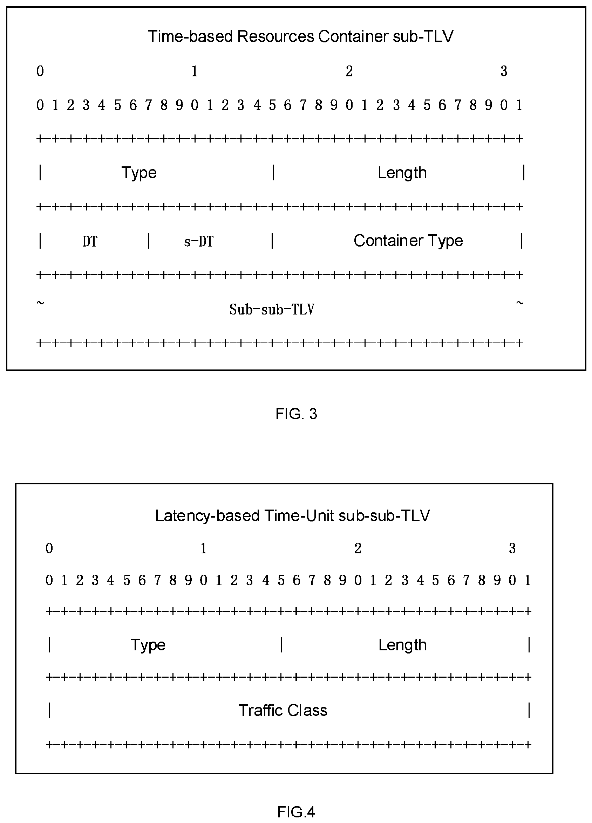

For example, FIG. 3 is a schematic diagram of Time-based Resources Container sub-TLV according to an embodiment of the present disclosure. Referring to FIG. 3:
Type/Length: 16 bits, which may be used for indicating a type and a length of the Time-based Resources Container sub-TLV.

Deterministic Type (DT): 8 bits, which may be used for indicating a type of classification of deterministic capability, such as a delay type, a jitter type, etc.

Sub-Deterministic Type (s-DT): 8 bits, which may be used for indicating a sub-class of classification of deterministic capability, such as 10 µs for a jitter type, 100 ms for a delay type, etc.

Container Type: 16 bits, which may be used for indicating a type of the time container, such as a period type, a time slot type, a synchronization type, a rate type, etc.

The sub-sub-TLV may carry, according to different time container types, a delay-type time unit, a jitter-type time unit, etc., respectively.

For example, FIG. 4 is a schematic diagram of Latency-based Time-Unit sub-sub-TLV according to an embodiment of the present disclosure. Referring to FIG. 4:
Type/Length: 16 bits, which may be used for indicating a type and a length of the Latency-based Time-Unit.

Traffic Class: 32 bits, which may be used for indicating a priority of the delay type.

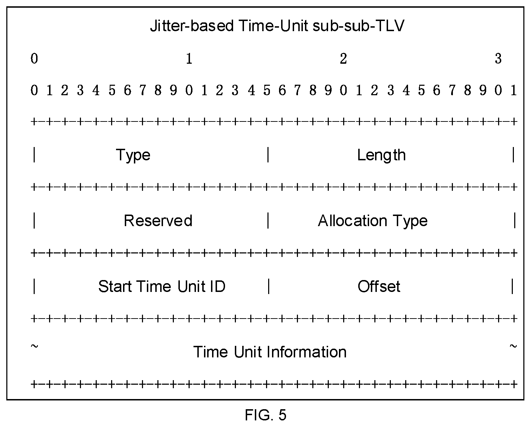

For example, FIG. 5 is a schematic diagram of Jitter-based Time-Unit sub-sub-TLV according to an embodiment of the present disclosure. Referring to FIG. 5:
Type/Length: 16 bits, used for indicating a type and a length of the Jitter-based Time-Unit.

Allocation Type: 16 bits, used for indicating a resource allocation type, including a contiguous allocation manner and a flexible allocation manner.

Start Time Unit ID: 16 bits, used for indicating a start time unit number.

Offset: 16 bits, used for indicating an offset.

Time Unit Information: variable, used for indicating time unit array information, etc.

As an example, the resource information based on the time dimension may be carried in a Time-based Resources Capacity sub-TLV. The Time-based Resources Capacity sub-TLV may include bandwidth and a resource amount bearable based on the time unit.

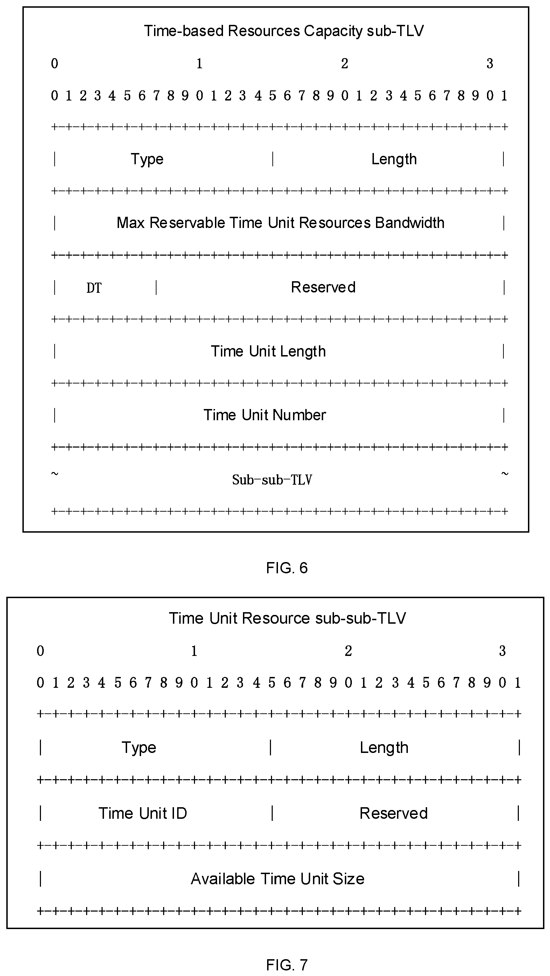

For example, FIG. 6 is a schematic diagram of Time-based Resources Capacity sub-TLV according to an embodiment of the present disclosure. Referring to FIG. 6:
Type/Length: 16 bits, used for indicating a type and a length of the Jitter-based Time-Unit sub-sub-TLV.

Time Unit Length: 32 bits, used for indicating a basic time unit length.

Time Unit Number: 32 bits, used for indicating a number of basic time units.

There may be multiple types of allocatable basic time units carried in the sub-sub-TLV.

For example, FIG. 7 is a schematic diagram of Time Unit Resource sub-sub-TLV according to an embodiment of the present disclosure. Referring to FIG. 7:
Type/Length: 16 bits, used for indicating a type and a length of the Jitter-based Time-Unit sub-sub-TLV.

Time Unit ID: 16 bits, used for indicating a time unit number.

Available Time Unit Size: 32 bits, used for indicating an available time unit size.

As an example, the resource based on the time dimension may be reported. The BGP-LS protocol may be used to carry the Time-based Resources Container sub-TLV and the Time-based Resources Capacity sub-TLV, and report the resource information based on the time dimension to a controller, to construct a deterministic resource pool based on the time dimension.

For example, in a centralized or hybrid control plane scenario, a deterministic resource pool based on the time container may be constructed. The resource information based on the time dimension may be reported to the controller through the BGP-LS protocol. The Time-based Resources Container sub-TLV and the Time-based Resources Capacity sub-TLV may be carried in a Link Attribute TLV of the BGP-LS protocol, to construct a deterministic resource TED based on the time dimension.

As an example, the resource based on the time dimension may be collected. The NETCONF/YANG protocol may be used through network device configuration and management to carry the resource information based on the time dimension to the controller, to construct a deterministic resource pool based on the time dimension.

In an exemplary embodiment, the time container information includes at least one time unit, and the time unit includes at least one of the following types: a slot unit, a rate unit, a period unit, or a synchronous time unit.

As an example, the time unit may be divided into multiple types, which may include a slot unit (e.g., a TQF queue), a rate unit (e.g., an ADN/ATS/Deadline/CBS queue), a period unit (e.g., a CSQF queue and a T-CQF queue), a synchronous time unit (e.g., a TAS queue), etc.

In an exemplary embodiment, the time container information includes container resource attributes, the container resource attributes include container resource parameters, and the container resource parameters include at least one of the following parameters: a container type, a container maximum resource capacity, a time unit duration, a time unit resource capacity, or a number of time units.

As an example, the container maximum resource capacity may be quantified into a maximum bit amount bearable based on the time unit, and the maximum bit amount as a numerical value may be used for calculation.

In an exemplary embodiment, in response to the container type being the slot unit, the container maximum resource capacity is a product of the time unit resource capacity and the number of time units; in response to the container type being the rate unit, the container maximum resource capacity is an upper delay limit of the rate unit; in response to the container type being the period unit, the container maximum resource capacity is a product of the period unit duration and the number of period units; in response to the container type being the synchronous time unit, the container maximum resource capacity is a time offset of the synchronous time unit.

As an example, in response to the container type being the slot unit, the container maximum resource capacity may be a product of the time unit resource capacity and the number of time units; in response to the container type being the rate unit, the container maximum resource capacity may be an upper delay limit of the rate unit; in response to the container type being the period unit, the container maximum resource capacity may be a product of the period unit duration and the number of period units; in response to the container type being the synchronous time unit, the container maximum resource capacity may be a time offset.

In an exemplary embodiment, the time container information includes container time attributes, and the container time attributes are used for representing a classification of deterministic capability.

As an example, the container time attributes may represent a classification of deterministic capability, such as a delay type, a jitter type, etc., and may be further subdivided into sub-classes according to different Service Level Agreement (SLA) indicators, for example, a delay type of 10 ms, 20 ms, a jitter type of 10 µs, 20 µs, etc.

As an example, all time containers of a jitter type share link bandwidth of the jitter type. All time containers of the jitter type may also share time unit/slot unit resources, and the resources are carried in the time unit/slot unit container, and other time containers may allocate time slot resources in the time unit/slot unit resources.

In an exemplary embodiment, the time container information includes time unit resource parameters, and the time unit resource parameters include at least one of the following parameters: an allocation mode of a time unit, a time unit resource attribute, or an allocated time unit.

In an exemplary embodiment, the allocation mode of the time unit includes at least one of the following modes: a fixed mode or a floating mode.

As an example, the time unit resource parameters may include an allocation mode of a time unit, a time unit resource attribute, an allocated time unit, etc.

As an example, the allocation mode of the time unit may include a fixed mode and a floating mode. In the fixed mode, the number of allocated time units and specific numbers need to be specified. The fixed mode may include contiguous allocation and flexible allocation. Parameters of the contiguous allocation may include a start time unit number and the number of time units. Parameters of the flexible allocation may include an array composed of time units, such as a bitmap. The allocated time units may be represented as an end number to a start number, or may be represented by an array, etc. The floating mode needs to specify the number of allocated time units, and its parameters may include the number of time units. The allocation of time units may be fixed or dynamically variable.

The present disclosure, by creating a resource based on a time dimension, wherein the resource based on the time dimension indicates a resource amount bearable based on a time unit, and processing the resource based on the time dimension, solves the problem in the related art that, in addition to traditional bandwidth resources, TE also needs to manage and schedule multi-dimensional deterministic resources such as queues and buffers, which makes resource management and scheduling complex, and achieves the purpose of scheduling resources based on a time dimension to meet differentiated deterministic QoS.

For ease of understanding the resource advertisement process of the present disclosure, further description is provided below through several examples.

### Example 1

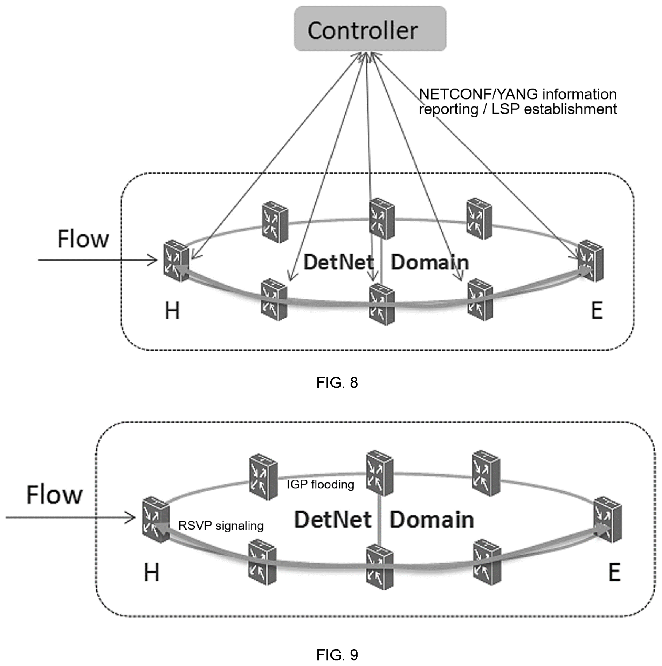

FIG. 8 is a structural diagram of a centralized deterministic network according to an embodiment of the present disclosure. As shown in FIG. 8, devices in a DetNet domain are flooded through an IGP protocol, a controller may interact with a DetNet network through a NETCONF/YANG protocol, and nodes in the DetNet domain flood node information through the IGP protocol to construct a resource TED, and centrally establish Link State PDUs (LSPs) through the controller. Specifically, the following steps may be included:
Step 1, creating a resource based on a time dimension. A maximum bit amount bearable based on a time unit may be specified, for quantifying deterministic capability of an H node to an E node and intermediate nodes and links therebetween in the DetNet domain.

Step 2, advertising the resource based on the time dimension. The NETCONF/YANG protocol, etc., may be used to collect time container resource conditions on the link to the controller, to construct a deterministic resource pool based on the time dimension.

For example, the H node to the intermediate node supports 10 µs and 20 µs queue scheduling of CSQF, and time container information thereof is reported as follows:
1) Time container 1, DT=1, s-DT=10 µs, container type being a period unit, time unit length being 10 µs, and number being 4.
2) Time container 2, DT=1, s-DT=20 µs, container type being a period unit, time unit length being 20 µs, and number being 2.
3) Resource capacity of the time dimension, maximum bandwidth being 5 G, DT=1.

### Example 2

FIG. 9 is a structural diagram of a distributed deterministic network according to an embodiment of the present disclosure. As shown in FIG. 9, devices in a DetNet domain may be flooded through an IGP protocol. In a fully distributed scenario, nodes in the DetNet domain flood node information through the IGP protocol to construct a resource TED, and may compute paths in a distributed manner through the nodes, and establish LSPs in a distributed manner through RSVP (Resource Reservation Protocol) signaling. Specifically, the following steps may be included:
Step 1, creating a resource based on a time dimension. A maximum bit amount bearable based on a time unit may be specified, for quantifying deterministic capability of an H node to an E node and intermediate nodes and links therebetween in the DetNet domain.
Step 2, flooding the resource based on the time dimension. The IGP (ISIS or OSPF protocol) is used to advertise time container resource information on the link, to form a deterministic resource pool based on the time dimension.

A Time-based Resources Container sub-TLV is carried for indicating a resource object of the time container, and a Time-based Resources Capacity sub-TLV is carried for indicating resource capacity of the time dimension. For example, all nodes support 10 µs and 20 µs queue scheduling of TQF, and time container information and resource capacity of the time dimension are flooded as follows:
1) Link 1, time container 1, DT=1, s-DT=10 µs, container type being a slot unit, allocation type being contiguous allocation, start time unit number being 1, and offset being 4.
2) Link 2, time container 2, DT=1, s-DT=20 µs, container type being a slot unit, allocation type being flexible allocation, and time unit bitmap being 5, 7.
3) Maximum bandwidth being 5 G, DT=1, basic slot length being 10 µs, and number of basic slots being 36.

### Example 3

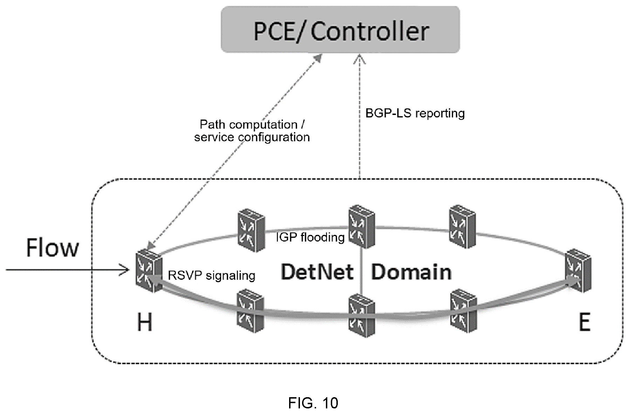

FIG. 10 is a structural diagram of a hybrid deterministic network according to an embodiment of the present disclosure. As shown in FIG. 10, devices in a DetNet domain are flooded through an IGP protocol. In a hybrid scenario, nodes in the DetNet domain flood node information through the IGP protocol to construct a resource TED, compute a path through a Path Computation Element (PCE), and establish an LSPs in a distributed manner through RSVP signaling. Specifically, the following steps may be included:
Step 1, creating a resource based on a time dimension. A maximum bit amount bearable based on a time unit may be specified, for quantifying deterministic capability of an H node to an E node and intermediate nodes and links therebetween in the DetNet domain.
Step 2, flooding the resource based on the time dimension. The IGP (ISIS or OSPF protocol) may be used to flood and advertise time container resource information on the link.

A Time-based Resources Container sub-TLV is carried for indicating a resource object of the time container, and a Time-based Resources Capacity sub-TLV is carried for indicating resource capacity of the time dimension. For example, all nodes support 100 µs and 10 ms queue scheduling of Deadline, and time container information and resource capacity of the time dimension are flooded as follows:
1) Link 1, time container 1, DT=2, s-DT=100 µs, container type being a rate unit, and priority being 1.
2) Link 2, time container 2, DT=2, s-DT=10 ms, container type being a rate unit, and priority being 3.
3) Maximum bandwidth being 5 G, DT=2.

Step 3, advertising, by using the BGP-LS protocol, the deterministic resource carrying the time container, to construct a deterministic resource pool based on the time dimension.

Through the description of the above implementations, those skilled in the art can clearly understand that the method according to the above embodiments may be implemented by means of software plus a necessary general hardware platform, and certainly may also be implemented by hardware, but in many cases the former is a better implementation. Based on such understanding, the technical solution of the present disclosure, essentially or the part contributing to the prior art, may be embodied in the form of a software product. The computer software product is stored in a storage medium (such as ROM/RAM, a magnetic disk, or an optical disk), and includes several instructions for causing a terminal device (which may be a mobile phone, a computer, a server, or a network device, etc.) to execute the method described in each embodiment of the present disclosure.

Embodiments of the present disclosure further provide a computer-readable storage medium. The computer-readable storage medium stores a computer program, wherein the computer program is configured to, when being run, implement steps in any one of the above method embodiments.

In an exemplary embodiment, the above computer-readable storage medium may include, but is not limited to, any medium that can store a computer program, such as a USB flash drive, a Read-Only Memory (ROM), a Random Access Memory (RAM), a removable hard disk, a magnetic disk, or an optical disk.

Embodiments of the present disclosure further provide an electronic device, including a memory and a processor. The memory stores a computer program, and the processor is configured to run the computer program to execute steps in any one of the above method embodiments.

In an exemplary embodiment, the above electronic device may further include a transmission device and an input/output device, wherein the transmission device is connected to the processor, and the input/output device is connected to the processor.

For specific examples in this embodiment, reference may be made to the examples described in the above embodiments and exemplary implementations, and details are not repeatedly described in this embodiment.

Obviously, those skilled in the art should understand that each module or each step of the present disclosure as described above may be implemented by a universal computing device, they may be centralized on a single computing device or distributed on a network composed of a plurality of computing devices, they may be implemented by program codes executable by a computing device, and thus may be stored in a storage device and executed by the computing device. In some cases, the steps shown or described may be executed in an order different from that described here, or they may be respectively fabricated into individual integrated circuit modules, or a plurality of modules or steps thereof may be fabricated into a single integrated circuit module for implementation. As such, the present disclosure is not limited to any specific combination of hardware and software.

The above descriptions are merely exemplary embodiments of the present disclosure and are not intended to limit the present disclosure. For those skilled in the art, the present disclosure may have various modifications and changes. Any modifications, equivalent replacements, improvements, etc., made within the principle of the present disclosure shall be included within the scope of protection of the present disclosure.

## Claims

1. A method for managing resources, comprising:
creating a resource based on a time dimension, wherein the resource based on the time dimension indicates a resource amount bearable based on a time unit; and
processing the resource based on the time dimension.

2. The method according to claim 1, wherein the creating a resource based on a time dimension comprises:
dividing, by employing a containerized manner, resources based on the time dimension, to generate a time container of the resource.

3. The method according to claim 2, wherein the time container is used for quantifying deterministic capability of a resource object, and a type of the resource object comprises at least one of the following types: a physical link, a node, or a virtual link.

4. The method according to claim 2, wherein the processing the resource based on the time dimension comprises:
processing the resource based on the time dimension; wherein a processing manner comprises at least one of the following manners: advertising, reserving, or allocating.

5. The method according to claim 1, wherein a type of the resource based on the time dimension comprises at least one of the following: bandwidth or a buffer; and a resource unit of the resource amount bearable based on the time unit comprises at least one of the following units: Bits, Bytes, or Octets.

6. The method according to claim 4, wherein the advertising the resource of the time container comprises:
extending a resource advertisement protocol to carry resource information based on the time dimension, wherein the resource information based on the time dimension is used for indicating resource capacity of the time dimension, and the resource information based on the time dimension comprises the resource amount bearable based on the time unit; and
advertising, based on the resource advertisement protocol carrying the resource information based on the time dimension, the resource based on the time dimension.

7. The method according to claim 6, wherein advertising the resource based on the time dimension further comprises:
extending the resource advertisement protocol to carry time container information, wherein the time container information is used for indicating a resource object of the time container;
advertising, based on the resource advertisement protocol carrying the time container information, the resource based on the time dimension.

8. The method according to claim 7, wherein the resource advertisement protocol comprises at least one of the following protocols: an Interior Gateway Protocol, IGP, or a Border Gateway Protocol - Link State, BGP-LS.

9. The method according to claim 7, wherein the time container information comprises at least one time unit, and the time unit comprises at least one of the following types: a slot unit, a rate unit, a period unit, or a synchronous time unit.

10. The method according to claim 9, wherein the time container information comprises a container resource attribute, the container resource attribute comprises container resource parameters, and the container resource parameters comprise at least one of the following parameters: a container type, a container maximum resource capacity, a time unit duration, a time unit resource capacity, or a number of time units.

11. The method according to claim 10, wherein:
in response to the container type being the slot unit, the container maximum resource capacity is a product of the time unit resource capacity and the number of time units;
in response to the container type being the rate unit, the container maximum resource capacity is an upper delay limit of the rate unit;
in response to the container type being the period unit, the container maximum resource capacity is a product of the period unit duration and the number of period units; and
in response to the container type being the synchronous time unit, the container maximum resource capacity is a time offset of the synchronous time unit.

12. The method according to claim 7, wherein the time container information comprises a container time attribute, and the container time attribute is used for representing a classification of deterministic capability.

13. The method according to claim 7, wherein the time container information comprises time unit resource parameters, and the time unit resource parameters comprise at least one of the following parameters: an allocation mode of a time unit, a time unit resource attribute, or an allocated time unit.

14. The method according to claim 13, wherein the allocation mode of the time unit comprises at least one of the following modes: a fixed mode or a floating mode.

15. A computer-readable storage medium, having a computer program stored therein, wherein the computer program is configured to, when being executed by a processor, implement steps of the method according to any one of claims 1 to 14.

16. An electronic device, comprising a memory, a processor, and a computer program that is stored in the memory and executable by the processor, wherein the processor is configured to, when executing the computer program, implement steps of the method according to any one of claims 1 to 14.
